# EUROPÄISCHE PATENTSCHRIFT

(11) **EP 2 073 047 B1**
(45) Veröffentlichungstag und Bekanntmachung des Hinweises auf die Patenterteilung: **16.04.2014**
(21) Anmeldenummer: 08105706.9
(22) Anmeldetag: 30.10.2008
(51) Int. Cl.: G02B 7/00, G02B 7/02, G01S 7/481

(54) **Verfahren zur Montage und Justage einer elektro-optischen Vorrichtung sowie Messgerät montiert und justiert nach einem derartigen Verfahren**
An assembly and alignment method for an electro-optical device and a measuring device assembled and aligned according to the method
Procédé de montage et d'ajustage d'un dispositif électro-optique et dispositif de mesure monté et ajusté selon un tel procédé

(30) Priorität: 20.12.2007 DE 102007061737
(43) Veröffentlichungstag der Anmeldung: 24.06.2009
(73) Patentinhaber: ROBERT BOSCH GMBH, 70442 Stuttgart (DE)
(72) Erfinder: Wolf, Peter, 70771, Leinfelden-Echterdingen (DE); Braun, Andreas, 70736, Fellbach (DE); Weller, Friedbert, 70794, Filderstadt (DE); Skultety-Betz, Uwe, 70771, Leinfelden-Echterdingen (DE); Stierle, Joerg, 71111, Waldenbuch (DE); Haase, Bjoern, 70184, Stuttgart (DE); Renz, Kai, 70771, Leinfelden-Echterdingen (DE)

(56) Entgegenhaltungen:
- EP-A- 1 760 509
- WO-A-91/06022
- WO-A-02/093228
- DE-A1-102007 012 589
- US-B1- 6 441 895

## Beschreibung

### Stand der Technik

### Offenbarung der Erfindung

Die Erfindung geht aus von einer Vorrichtung zur räumlichen Positionierung optischer Komponenten in einer Mehrzahl von Achsen.

Eine besondere Herausforderung stellt es dar, die relative Positionierung zweier oder mehrerer Optikelemente in mehr als einer Achse einzujustieren, beispielsweise bei einem mehrlinsigen Objektiv oder auch bei der Justage einer Kollimationsoptik. Optikelemente im Sinne dieser Anmeldung sind dabei beispielsweise Lochblenden, Photodetektoren, diffraktive Komponenten, Spiegel, Lichtfilter, Schirme und insbesondere auch Linsen und Photoemitter.

Diese Optikelemente weisen im Allgemeinen selbst keine Vorrichtung zur Montage wie z.B. Gewinde zur Verschraubung, Löcher zum Einsetzen von Schrauben etc. auf. Sie werden daher in der Regel in geeigneten Trägervorrichtungen gefasst, die den Zusammenbau des optischen Gesamtsystems ermöglichen.

Eine Justage von Komponenten ist immer dann erforderlich, wenn die jeweiligen Einzelkomponenten (Optikelemente oder Träger) nicht oder zu nicht vertretbaren Kosten mit Toleranzen gefertigt werden können, die einer Justage überflüssig machen würden. Zu diesem Zweck werden in der Regel die zur Verbindung der Trägerelemente verwendeten Mechanikkomponenten justierbar ausgeführt, beispielsweise indem der Abstand zweier Trägerelemente mittels Feingewindeschrauben variiert werden kann. Der Mechanikaufbau umfasst in diesem Fall bewegliche Elemente.

Zum Zweck der Justage sind eine Vielzahl feinmechanischer Konstruktionsprinzipien bekannt. Gemeinsam ist all diesen Verfahren, dass sie im Vergleich zu Aufbauten ohne bewegliche Teile bezüglich Erschütterung, Staubempfindlichkeit, Temperaturdrift und allgemeiner Stabilität unterlegen sind.

Eine besondere Herausforderung stellt es dar, optische Komponenten auch dann präzise zu justieren, wenn nur wenig Bauraum zur Verfügung steht. In der Regel ist der Platzbedarf des Gesamtsystems zu einem Großteil durch die beweglichen Justage- und Trägerteile limitiert und nur zu einem geringen Anteil durch die zu platzierenden optischen Elemente. Gleiches gilt für die Kosten, die zu einem großen Teil nicht durch die optischen Elemente verursacht werden, sondern vielmehr durch die mechanischen Träger- und Justagekomponenten.

Während eine Justage in einer oder zwei Raumrichtungen noch vergleichsweise einfach zu realisieren ist, setzt eine drei- oder mehrachsige Justage in der Regel eine mehrstufige Mechanik voraus. Soll beispielsweise Winkel und Position eines Spiegels im Raum justiert werden, so wird in der Regel eine Winkeljustage-Einheit verwendet, welche selbst wieder auf einem Positionierschlitten sitzt.

Um eine mehrstufige Justage preisgünstiger und bei sehr kleinem Bauraum zu ermöglichen, sind bereits Verfahren bekannt, welche darauf beruhen, dass die Optikelemente mit einer lötfähigen Beschichtung versehen werden - wenn sie nicht ohnehin lötfähig sind - und mit Lötzinn an einer zweiten Einheit fixiert werden. Je nach Justageposition erfolgt die Verbindung dann mit mehr oder weniger Lötzinn. Der Vorteil dieses Verfahrens besteht darin, dass eine echte dreidimensionale Positionierung möglich ist. Je größer der mit Lötzinn überbrückte Spalt ist, desto größer wird dabei das der Justage zugängliche Ortsfenster. Die Justage erfolgt dabei beispielsweise derart, dass die optischen Einzelkomponenten mit einer Hilfsvorrichtung zunächst an der optimalen Position im Raum haltend positioniert werden, beispielsweise durch einen Roboter oder durch einen Verschiebeschlitten, und im nächsten Schritt bleibend und dauerhaft mit Lötzinn fixiert werden. Die Hilfsvorrichtung kann, nachdem die Lötverbindung ausgehärtet ist, entfernt werden. Die Herausforderung besteht dabei darin, sicherzustellen, dass die vor Beginn des Lötprozesses gefundene optimale Position durch den Lötvorgang nicht wieder dejustiert wird. Wird beispielsweise eine Laserdiode mittels einer Hilfsvorrichtung oberhalb einer metallischen oder metallisierten Basisplatte in einer definierten Höhe gehalten und in der dieser Position verlötet, so kann davon ausgegangen werden, dass die Position solange nicht verändert bleibt, solange das zugeführte Lötzinn flüssig ist. Die metallische Flüssigkeit übt praktisch keine mechanischen Kräfte auf die beiden zu verbindenden Objekte aus. Reduziert man die Temperatur bis zum Erstarrungspunkt, so verbleibt die Justage optimal. Reduziert man die Temperatur jedoch weiter, so zieht sich das erstarrte, verbindende Lötzinn zusammen und übt mechanische Kräfte auf das zu verbindende Paar von Optikkomponenten aus. Es muss daher davon ausgegangen werden, dass die ursprünglich optimal eingestellte Justage sich während des Abkühlens der Lötverbindung deutlich verschlechtert. Die für das Maß der Dejustage wichtigen Parameter sind dabei einerseits die Ausdehnungskoeffizienten des Lots, die Erstarrungstemperatur der Legierung und die Länge des Spalts, welcher mittels Lötzinn überbrückt wird. Insbesondere ergibt sich bei einem kleinen Spalt aus Lötzinn bei gleicher relativer Kontraktion nur eine geringe absolute Längenänderung. Bei einem solchen Verfahren ist daher ein Kompromiss einzugehen. Einerseits sind aus Sicht der thermischen Dejustage möglichst dünne Spalte wünschenswert, andererseits können bei dünnen Spalten nur kleine Bauelemente-Toleranzen aufgefangen werden.

Alternativ zu einer räumlichen Positionierung durch Löten sind auch Verfahren bekannt, welche eine mehrachsige räumliche Positionierung dadurch realisieren, dass ein mit einer Hilfsvorrichtung gehaltenes optisches Element positioniert wird. Der sich ergebende Luftspalt wird anschließend mit einem spaltfüllenden Klebewerkstoff aufgefüllt. Im Idealfall bleibt die mit der Hilfsvorrichtung eingestellte Justage während des Aushärtens des Klebers dabei erhalten. Praktisch sind jedoch Schwundprozesse zu berücksichtigen, die je nach Klebewerkstoff zu beträchtlichen relativen Längenänderungen führen können. Das heißt, ähnlich wie im Fall einer lötenden Positionierung muss davon ausgegangen werden, dass der Klebewerkstoff während des Aushärtevorgangs mechanische Kräfte auf das zu verbindende Paar optischer Komponenten ausübt und damit das vor Aushärten des Klebers optimal justierte Paar wieder dejustiert. Da die Schwundprozesse zu einer relativen Längenänderung führen, kann dieser Effekt dadurch minimiert werden, dass der Klebespalt so klein wie möglich ausgeführt wird.

Eine Anwendung, bei der die relative Position von zwei Optikelementen mit besonders hoher Präzision einjustiert werden muss, ist die Kollimation einer Laserdiode. Eine solche Kombination von Laserdiode und Kollimationsoptik findet beispielsweise in elektro-optischen Messgeräten, wie beispielsweise Laser-entfernungsmessern Anwendung. Die Aufgabe besteht dabei darin, das unter einem großen Winkelbereich emittierte Licht eines Halbleiterlasers in ein näherungsweise paralleles Strahlenbündel zusammenzufassen. Dazu muss das Bauelemente-Paar Laser/Kollimationslinse derart justiert werden, dass der Austritt des Lasers exakt mit dem Brennpunkt der in der Regel asphärischen Kollimationslinse zusammenfällt. Hierzu ist es insbesondere erforderlich, die Relativposition mit einer Genauigkeit in der Größenordnung von 5 µm einzustellen. Ein Lateralversatz der optischen Achse der Kollimationslinse relativ zum Laser-Austritt führt zu einem Strahlenbündel, welches die Linse mit einem gewissen Winkelversatz verlässt. Die Konsequenz ist, dass das Laserlicht die Linse nicht in der gewünschten Richtung verlässt. Für die skizzierte Anwendung "Kollimation eines Halbleiterlasers" ist damit eine dreidimensionale Justage der Relativposition von Laser und Linse wünschenswert und notwendig. Die Justage erfolgt um mindestens drei Achsen (1.: Fokus, 2.: Lateralversatz in X, 3.: Lateralversatz in Y), die gegebenenfalls wünschenswerterweise noch um die Winkelorientierung der Empfangslinse (2 Achsen) ergänzt wird.

Eine derartige Justage in 3/5 Achsen unter den Bedingungen der Großserienfertigung zu realisieren, stellt eine hohe Herausforderung dar. Bekannte Lösungen bestehen darin, die Linse in einer Halterung, z.B. einer zylindrischen aus Aluminium gefertigten Kollimatorhülse, zu fixieren und die Laserdiode so lange weiter in diese Halterung einzuschieben, bis der Lichtaustritt in der Brennebene der Linse liegt. Eine derartige Vorrichtung gestattet dabei nur die Justage in einer Raumrichtung (Fokus). Die Korrektur der Richtung, in der das Laserlicht die Linse verlässt, lässt sich in diesem Fall nur über die Verwendung zusätzlicher Justagevorrichtungen realisieren. Beispielsweise dadurch, dass das aus der Linse austretende Licht zunächst auf einen in zwei Achsen justierbaren Umlenkspiegel geleitet wird. Durch Variation des Anstellwinkels dieses Umlenkspiegels besteht dann die Möglichkeit, auf einen Winkelfehler zu reagieren, der dadurch verursacht wurde, dass die Position des Austrittspiegels des Halbleiterlasers und die optische Achse der Kollimationslinse nicht aufeinander fallen.

Alternativ ist vorgeschlagen worden, zunächst die Kollimationslinse in einer Vorrichtung zu fixieren und im nächsten Schritt mittels einer Lötverbindung die Laserdiode in den Fokus der Linse zu justieren. Die Realisierung einer Positioniergenauigkeit im Mikrometerbereich stellt dabei hohe Auforderungen, insbesondere mit Blick auf die oben beschriebenen Effekte, welche beim Abkühlen des Lots vom Schmelzpunkt herunter auf Raumtemperatur nicht vermieden werden können.

Aus der WO 02/093228 A2 ist eine Positioniereinrichtung zur exakten Positionierung eines ersten optischen Bauteils relativ zu einem zweiten optischen Bauteil bekannt. Die Positioniereinrichtung der WO 02/093228 A2 weist ein erstes Fixierelement und mindestens ein zweites Fixierelement auf, die durch eine Führung relativ zueinander geführt werden, dass sie im Wesentlichen nur in einer Einspannrichtung aufeinander bewegbar sind. Die Positioniereinrichtung der WO 02/093228 A2 besitzt mindestens ein zwischen diesen Fixierelementen angeordnetes Trägerelement, dessen Position relativ zu den Fixierelementen in mindestens einer Richtung quer zur Einspannrichtung justierbar und fixierbar ist. Die optischen Bauelemente sind dabei an verschiedenen der relativ zueinander justierbaren Elemente gehalten.

Gegenstand der Erfindung ist ein Verfahren zur Montagen und dreidimensionalen Justage nach Anspruch 1, welches erstens die Positionierung optischer Elemente, insbesondere die Positionierung von Laserdioden und Kollimationslinsen unter Großserienbedingungen gestattet, zweitens ohne hohe Temperaturen, wie sie beispielsweise für einen Lötprozess erforderlich sind, auskommt und drittens die ggf. auftretenden Probleme beim Aushörten von Klebwerkstoffen minimiert.

### Vorteile der Erfindung

Die Erfindung betrifft eine Vorrichtung zur Justage und zur Fixierung optischer Komponenten in mehr als zwei Achsen, insbesondere eine Vorrichtung zur Justage von Kollimationslinsen für Halbleiterlaser. Erfindungsgemäß wird vorgeschlagen, dass zum Zweck der Vermeidung großräumige Klebespalte und dem mit diesen Klebespalten verbundenen Verzug beim Aushärten des Klebewerkstoffs, bei einer mehrachsige Justage eine mehrteilige Trägerkonstruktion verwendet wird, wobei jedes einzelne Teil der Trägerkonstruktion in ein bis drei Achsen im Raum positionierbar ist.

Bei dieser Montage wird ein erstes Bauelement, beispielsweise eine Lichtquelle relativ zu einem zweiten Bauelement, beispielsweise einer Abbildungsoptik justiert. Die zu justierenden Bauelemente sind dabei auf entsprechenden Trägerelementen zu befestigen.

Des Weiteren betrifft die Erfindung ein elektro-optisches Messgerät, welches nach einem derartigen Verfahren montiert und justiert wird.

Bei dem erfindungsgemäßen Verfahren zur Montage und Justage einer elektro-optischen Vorrichtung wird beispielsweise ein erstes Bauelement relativ auf ein zweites Bauelement hin in drei Achsen dadurch ausgerichtet, dass das erste Bauelement zuerst in einer ersten Position in oder auf einem ersten Trägerelement fixiert wird, und das zweite Bauelement in einer zweiten Position in oder auf einem zweiten Trägerelement fixiert wird. Dann wird das zweite Trägerelement wird mit einem dritten Trägerelement verbunden und anschließend das dritte Trägerelement relativ zum ersten Trägerelement positioniert und fixiert.

Auf diese Weise ist es möglich durch eine Justage und Montage der Trägerelemente, eine exakte Justierung der Bauelemente vorzunehmen. Der Montageablauf und der daraus resultierende Aufbau der Komponenten zueinander weist den Vorteil auf, dass mit ihm eine mehrachsige und präzise Justage der Bauelemente, beispielsweise von Optikkomponenten gelingt.

In vorteilhafter Weise weist das erste Trägerelement, beispielsweise eine Leiterplatte Ausnehmungen auf, durch die das zweite Trägerelement, beispielsweise ein Kollimationsoptikhalter zumindest teilweise hindurch greifen kann. Danach kann dann das zweite Trägerelement mit dem dritten Trägerelement verlötet oder verklebt werden.

In vorteilhafter Weise wird das erste Bauelement, beispielsweise eine Laserdiode mit dem ersten Trägerelement, beispielsweise eine Leiterplatte derart verlötet, dass nicht nur die Anschlusspin der Diode kontaktier werden, sondern auch über das Diodengehäuse eine Wärmeabfuhr gewährleistet werden kann.

Bei der Montage ist das dritte Trägerelement, welches durch eine Montage- und Justierplatte gebildet wird, auf der dem ersten Bauelement abgewandten Seite des ersten Trägerelementes angeordnet. Dadurch ist es für einen mechanischen Manipulator leicht erreichbar.

Zur Fixierung der Trägerelemente wird das dritte Trägerelement beispielsweise über einen Klebeprozess an dem ersten Trägerelement fixiert.

In vorteilhafter Weise werden dazu ein oder mehrere lichtaushärtende Klebewerkstoffe verwerdet. Dazu kann in vorteilhafter Weise das Trägerelement optisch transparent ausgestaltet sein, so dass der oder die Klebewerkstoffe zur Aushärtung durch das dritte Trägerelement hindurch beleuchtet werden können. Bei einer entsprechenden Dimensionierung der Ausnehmungen im ersten und dritten Trägerelement relativ zur Größe des zweiten Trägerelementes können großräumiger Klebespalte und der mit solchen Klebespalten verbundenen Verzug der Komponenten beim Aushärten des Klebewerkstoffs, vermieden werden.

Das Prinzip der Erfindung wird am Beispiel der Kollimation eines Lasers illustriert, ein Beispiel, welches insbesondere für den Einsatz in Laser-Entfernungsmessern oder Baulasern wichtig ist, da dort die Anforderung von niedrigen Kosten, hohen Genauigkeiten und extremen Limitierungen bezüglich des Platzes zusammen kommen. Das erfindungsgemäße Verfahren, welches die Größe der Klebespalte durch geeignete Zwischenelemente reduziert, lässt sich in vorteilhafter Weise jedoch auch auf andere optische Systeme übertragen, bei denen vergleichbare Genauigkeiten erzielt werden müssen.

Mit dem erfindungsgemäßen Verfahren lassen sich elektro-optische Messgeräte, wie Laser-Entfernungsmesser oder auch Nivellierlaser auch unter den Bedingungen einer industriellen Großserienproduktion sehr präzise justieren.

Weitere Vorteile des erfindungsgemäßen Verfahrens und mittels dieses Verfahrens justierter elektro-optischer Vorrichtungen ergeben sich aus den nachfolgenden Zeichnungen sowie der zugehörigen Beschreibung.

### Zeichnung

In der Zeichnung sind Ausführungsbeispiele der erfindungsgemäßen Vorrichtung dargestellt. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

Es zeigen:
- Figur 1: ein elektro-optisches Entfernungsmessgerät in einer perspektivischen Übersichtsdarstellung,
- Figur 2: eine schematisierte Aufsicht (Explosionszeichnung) auf ein Ausführungsbeispiel einer Vorrichtung zur Relativjustage eines ersten Bauelementes (Laserdiode) relativ zu einem zweiten Bauelement (Kollimationslinse),
- Figur 3: eine perspektivische Ansicht der Anordnung nach Figur 2,
- Figur 4: ein Schnittbild durch die optische Achse eines fertig montierten erfindungsgemäßen Aufbaus analog zu Figur 1,
- Figur 5: eine perspektivische Darstellung eines fertig montierten erfindungsgemäßen Aufbaus analog zu Figur4.

### Beschreibung eines Ausführungsbeispiels

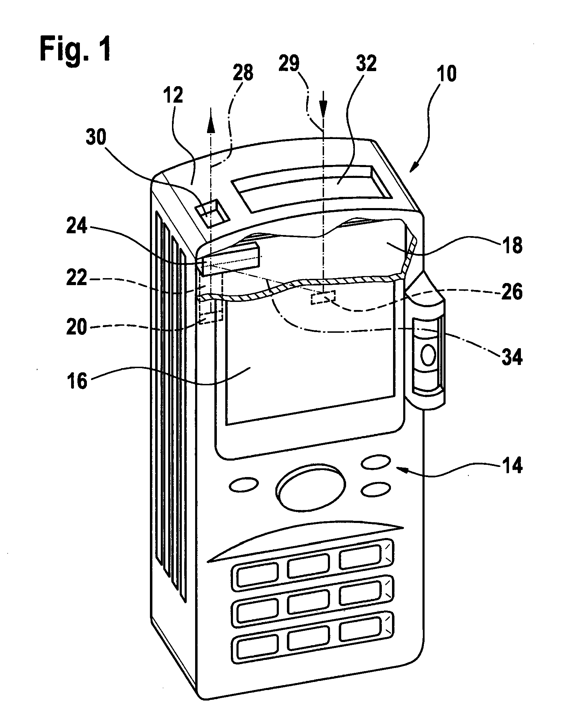

Figur 1 zeigt ein als Entfernungsmessgerät 10 ausgeführtes elektro-optisches Messgerät. Dieses weist ein Gehäuse 12, Betätigungselemente 14 zum Ein- bzw. Ausschalten des Entfernungsmessgeräts 10 sowie zum Starten bzw. Konfigurieren eines Messvorgangs auf. Neben den Bedienelementen 14 besitzt das Messgerät 10 eine Ausgabeeinheit 16 in Form eines Displays zur Wiedergabe von Messergebnissen sowie zur Darstellung von Angaben betreffend den Gerätestatus. Auf einem Trägerelement, beispielsweise einer Leiterplatte 18, innerhalb des Gehäuses 12 des Messgeräts 10 sind eine als Laserdiode ausgeführte Sendeeinheit 20 zur Erzeugung eines optischen Sendemesssignals sowie elektronische Komponenten einer Auswerteeinheit angeordnet. Das elektronische Träger-Element 18 ist über Befestigungsmittel, beispielsweise Schrauben an einem Optikträger befestigt. Der Optikträger weist zudem einen Lichtkanal 22, eine Umlenkeinheit 24 sowie eine Empfangsoptik zur Bündelung von Messsignalanteilen auf ein Empfangselement hin, auf. Die Sendeeinheit 20, der Lichtkanal 22, die Umlenkeinheit 24 für einen Referenzpfad 34 sowie ein Empfangseinheit 26 sind in Figur 1 lediglich schematisch angedeutet.

Zur Messung eines Abstands des Entfernungsmessgeräts 10 zu einem entfernten Gegenstand wird im Betrieb des Messgeräts ein Sendemesssignal von der Sendeeinheit 20 entlang eines Sendepfads 28 ausgesendet. Die Sendemessstrahlung wird über eine Kollimationsoptik zu einem weitgehend parallelen Strahlenbündel geformt und verlässt das Messgerät über ein Fenster 30 im Gehäuse 12 des Gerätes 10. Das von der Oberfläche eines entfernten, zu vermessenden Gegenstands reflektierte, bzw. gestreute Messsignal gelangt über den Empfangspfad 29 wieder zum Messgerät 10 zurück und wird über ein Fenster 32 zum Teil in das Gehäuse eingekoppelt. Mittels einer in Figur 1 nicht dargestellten Empfangsoptik wird das Empfangsmesssignal gebündelt, bzw. fokussiert und von einem Empfangselement 26, beispielsweise einer Photodiode, insbesondere einer APD (Lawineneffekt-Photodiode), detektiert. In alternativen Ausführungsformen eines derartigen Messgeräts können das Eintrittsfenster in das Messgerät und die Empfangsoptik auch einstückig ausgebildet sein.

Derartige elektro-optische Entfernungsmesser werden mittlerweile kommerziell in Großserien gefertigt. Die Leistungsfähigkeit dieser Geräte hängt nicht zuletzt auch von einer präzisen Justage der optischen Komponenten, wie beispielsweise Laser, Linsen und Detektor zueinander ab. Dabei limitieren insbesondere der beschränkte Bauraum dieser zumeist handgehaltenen Geräte sowie die Anforderungen an eine Großserienproduktion die Justagemöglichkeiten.

Alternative Ausführungen einer elektro-optischen Vorrichtung, in denen das erfindungsgemäße Verfahren Verwendung findet, sind beispielsweise und nicht abschließend so genannte Baulaser, bei denen eine optische Markierung, zumeist ebenfalls durch einen Laser erzeugt, zur Anzeige und Nivellierung genutzt wird.

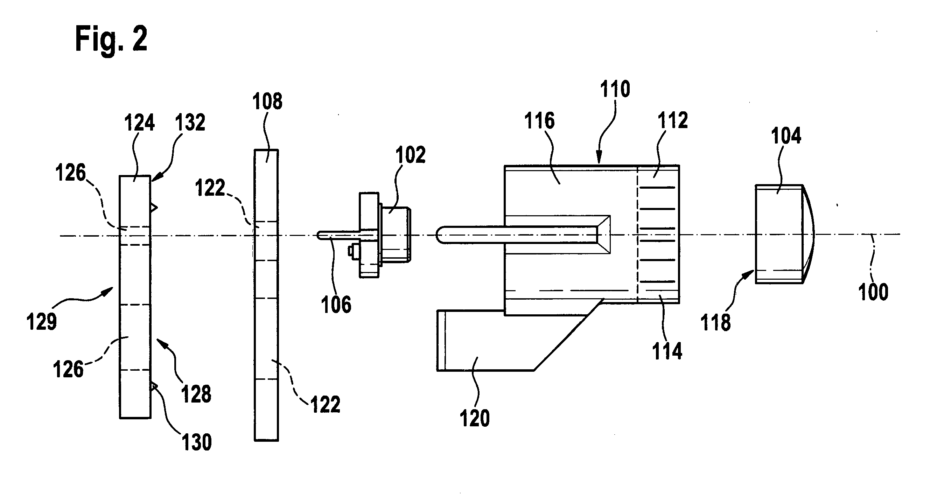

Die Figuren 2-5 zeigen ein Ausführungsbeispiel der erfindungsgemäßen Justage und Fixierung zweier Bauelemente einer elektro-optischen Vorrichtung zueinander. Das prinzipielle Verfahren und die dazu notwendigen Montagekomponenten und - Schritte werden am Beispiel der Kollimation eines Halbleiterlasers 102 illustriert, sind jedoch nicht auf diese Komponenten beschränkt. Die optisch aktiven Komponenten, die zueinander auf eine optische Achse 100 einjustiert werden müssen, werden dabei beispielhaft durch die Halbleiterlaser-Diode 102 und die Kollimationslinse 104 eines Laserentfernungsmessers nach Figur 1 gebildet.

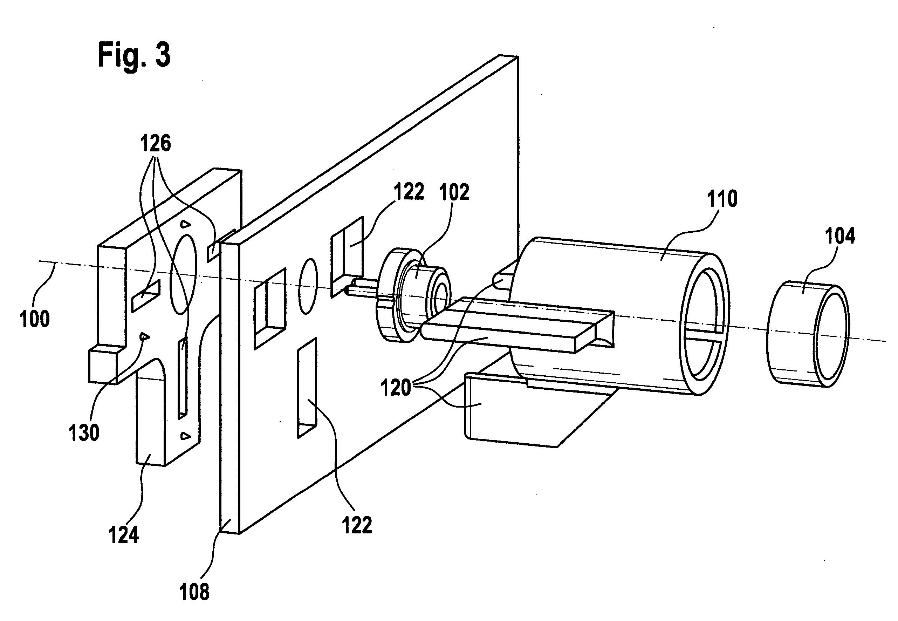

Die Figuren 2 und 3 zeigen die zu montierenden Komponenten und Bauelemente vor dem Zusammenbau in der Art einer Explosionszeichnung.

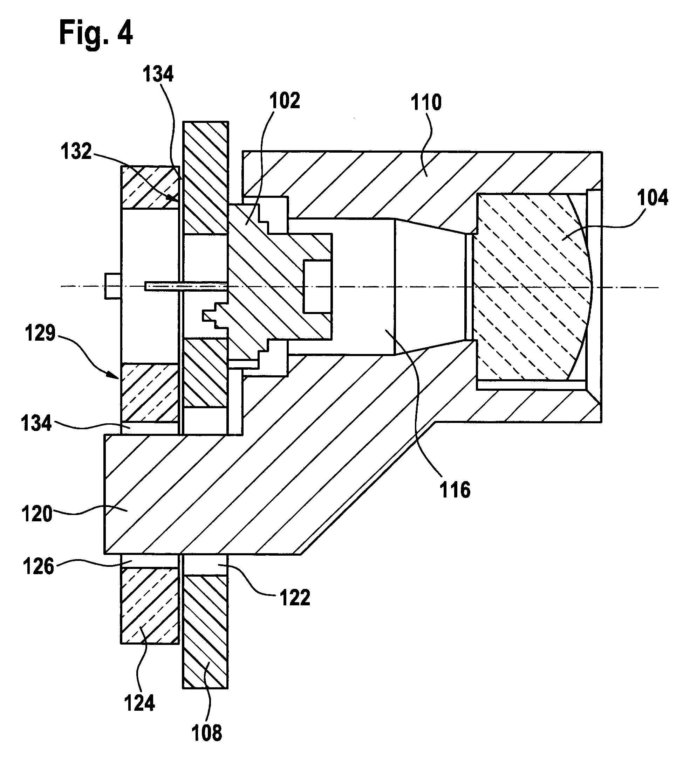

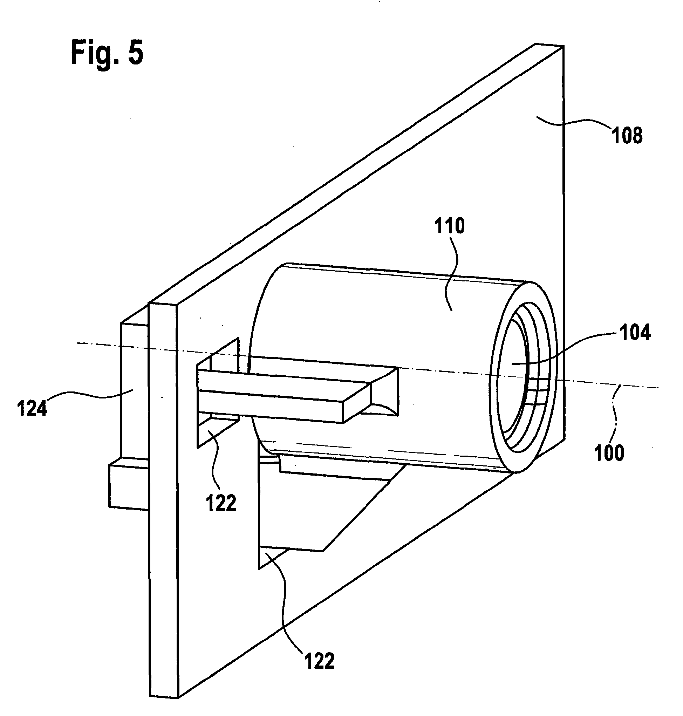

Die Figuren 4 und 5 zeigen die montierten Komponenten und Bauelemente in ihrer relativen Anordnung.

Der Halbleiterlaser 102 ist in einem metallischen Gehäuse untergebracht, welches mehrere Kontaktpins 106 aufweist, die zum Betrieb der Laserdiode elektrisch kontaktiert werden müssen. Hierzu werden die Kontakte 106 des Halbleiterlasers 102 in entsprechende Bohrungen bzw. Ausnehmungen auf einer Leiterplatte 108 eingesetzt und dort ohne einen weiteren Justageprozess verlötet.

Die Kollimationslinse 104 wird in einem Kollimatorhalter 110 fixiert, vorzugsweise ohne einen weiteren Justageprozess zu verwenden. Eine vorteilhafte Lösung ist hier beispielsweise, dass die Linse 104 in einen mit Deformationsrippen 112 versehenen zylindrischen Einsatz im Frontbereich 114 des Kollimatorhalters 110 eingepresst wird. Alternativ kann die Kollimationslinse 104 mit dem Halter 110 auch mit einem Klebeprozess verbunden werden.

Vorteilhafterweise weist der Kollimatorhalter 110 in seinem Innenraum 116 Blendenstrukturen auf, die es gestatten, das Laserlicht räumlich zu filtern, bevor es die Rückseite 118 der Kollimationslinse 104 erreicht. Mittels derartiger Strukturen ist es möglich, das Profil des Laserstrahls beim Austritt aus der Linse 104 zu optimieren.

In einer vorteilhaften Ausführungsform ist der Kollimatorhalter 110 zudem aus einem schwarzen Werkstoff hergestellt, der vorteilhafterweise im Innenraum 116 eine Oberflächenstruktur aufweist, die spiegelnde Reflexionen unterdrückt. Zu diesem Zweck kann es sinnvoll sein, den Kollimatorhalter 110 mehrteilig auszuführen und beispielsweise in den Innenraum 116 eine geeignete Hülse einzusetzen.

Der Kollimatorhalter 110 weist einen oder mehrere Befestigungsfüße 120 auf, die im gezeigten Ausführungsbeispiel der Figuren 2 bis 5 in Ihrer Form und Anordnung in etwa dem Leitwerk einer Rakete ähneln. Insbesondere erscheint es vorteilhaft, eine zylinderförmige Fußgeometrie für die Befestigungsfüße 120 zu verwenden oder alternativ einen rechteckigen Querschnitt einzusetzen, wie dies auch in den Figuren 2-5 gezeigt ist.

Die Leiterplatte 108 weist an der Position der Befestigungsfüße 120 entsprechende Ausnehmungen 122 (siehe insbesondere Figur 2) in Form von beispielsweise Fräskonturen oder Bohrungen auf, durch die die Befestigungsfüße 120 hindurch geführt werden können. Der Durchmesser dieser Fräskonturen oder Bohrungen in der Leiterplatte 108 ist dabei so bemessen, dass der Kollimatorhalter 110 bzw. die Kollimatorhalterfüße 120 innerhalb dieser Ausnehmungen 122 bewegt werden können. Das heißt, dass die Ausdehnungen der Kollimatorhalterfüße 120 um einen gewissen Wert kleiner sein müssen, als die entsprechenden Größe der Ausnehmungen 122 in der Leiterplatte 108.

Unterhalb der Leiterplatte 108 - d.h. auf der der Laserdiode 102 abgewandten Seite der Leiterplatte - befindet sich eine Montageplatte 124, die ebenfalls Ausnehmungen 126 enthält, durch die die Kollimatorhalterfüße 120 hindurch geführt werden können. (siehe hierzu insbesondere Figur 4) Im Unterschied zu den entsprechenden Ausnehmungen 122 in der Leiterplatte 108 sind diese Ausnehmungen oder Freihaltungen 126 in der Montageplatte 124 jedoch so bemessen, dass ein passgenauer Einsatz der Kollimatorhalterfüße 120 möglich ist. Nach dem Einsatz der Kollimatorhalterfüße 120 in die Montageplatte 124 verbleibt somit nur ein kleiner Luftspalt 134 in den Ausnehmungen/Freihaltungen 126.

Die Montageplatte 124 wiederum ist mit einem nur kleinen Spalt unterhalb der Leiterplatte 108 angebracht. Die Montageplatte 124 besteht vorteilhafterweise aus einem lichtdurchlässigen Werkstoff, wie beispielsweise Plexiglas, und weist vorteilhafterweise auf der der Leiterplatte 108 zugewandten Seite 128 Oberflächenstrukturen 130 (z.B. Rippen) auf, die zur Ausbildung eines geringen aber wohldefinierten Abstandes, d.h. beispielsweise eines kleinen Luftspalts in der Größenordnung von 0,1 mm führen, wenn die Montageplatte zur Anlage an die Leiterplatte kommt.

In einer vorteilhaften Ausführung ragen die Kollimatorhalterfüße 120 um eine gewisse Länge aus der der Leiterplatte abgewandten Seite der Montageplatte 124 heraus (siehe hierzu insbesondere Figur 4). In einer möglichen Ausführungsform sind die unteren, d.h. der Linse 104 abgewandten Enden der Kollimatorhalterfüße 120 außerdem derart ausgeformt, dass durch geeignete Elemente eine Verlier-Sicherung realisiert ist, die den Kollimatorhalter 110 nach dem Durchstecken durch die Montageplatte 124 dort mit einem gewissen Spiel fixiert.

Die Montage der Vorrichtung des Ausführungsbeispiels erfolgt vorteilhafterweise in mehreren Einzelschritten. Dabei wir in einem ersten Schritt zunächst das Gehäuse der Laserdiode 102 in die dazu vorgesehenen Bohrungen auf der Leiterplatte 108 eingesetzt und dort verlötet. Zwecks Kühlung der Diode 102 wird vorteilhafterweise auch das Gehäuse der Laserdiode auf der Oberseite 109 der Leiterplatte 108 mit dort vorgesehenen Strukturen verlötet.

In einem zweiten Schritt wird die Kollimationslinse 104 ohne präzisen Montageprozess und ohne Justierung mit einem geeigneten Verfahren in die Kollimatorhülse 110 eingesetzt.

Vollkommen äquivalent dazu können Schritt eins und zwei des Justageverfahrens auch vertauscht, d.h. in umgekehrter Reihenfolge durchgeführt werden.

In einem dritten Montageschritt werden die Befestigungsfüße 120 des Kollimatorhalters 110 durch die zu diesem Zweck vorgesehenen Ausnehmungen 122 auf der Leiterplatte 108 und der Montageplatte 124 hindurchgeführt, so dass sie auf der Rückseite 129 aus der Montageplatte 124 herausragen (siehe hierzu insbesondere Figur 4). Falls eine - im dargestellten Ausführungsbeispiel nicht gezeigte - Verlier-Sicherung an den Kollimatorhalterfüßen 120 vorgesehen ist, lässt sich die so vormontierte Baugruppe einfach und prozesssicher verarbeiten.

Im nächsten Montageschritt wird unter Nutzung des Spiels, welche die Kollimatorhalterfüße 120 innerhalb der Aussparungen 122 der Leiterplatte 108 haben, die Position und der Winkel, welche die Kollimatorlinse 104 relativ zur Laserdiode 106 annimmt, einjustiert.

Eine Justage des Abstands von Laserdiode 102 zu Linse 104 kann dadurch erfolgen, dass die Kollimatorhalterfüße 120 mehr oder weniger weit durch die Montageplatte 124 hindurch geführt werden. Wird mehr als ein Kollimatorhalterfuß 120 in der Vorrichtung genutzt, so kann durch jeweils unterschiedlich weit aus der Montageplatte 124 hinausragende Einzelfüße 120 eine Justage des Linsenwinkels erfolgen.

Über das Maß des Hinausragens der Einzelfüße 120 aus der Montageplatte 124 ist demgegenüber eine Justage der Position der optischen Achse der Kollimatorlinse 104 nicht möglich. Die Durchführungen 126 innerhalb der Montageplatte 108 sind so ausgeführt, dass der Kollimatorhalter 110 nahezu spielfrei geführt ist (siehe hierzu insbesondere Figur 3). Demgegenüber ist es möglich, die Montageplatte 124 relativ zur Leiterplatte 108 in zwei Raumrichtungen zu verschieben. Dabei wird davon ausgegangen, dass die Montageplatte 124 unmittelbar auf der Leiterplatte 108 aufliegt (ggf. mit einem wohldefinierten Luftspalt).

Da sich der Kollimatorhalter 110 bei Bewegung der Montageplatte 124 mitbewegt, kann das optische System durch eine Bewegung der Montageplatte derart justiert werden, dass die Lateralposition der Linse 104 exakt mit der Position des Laseraustritts in der Laserdiode 102 zusammenfällt, die beiden zu justierenden Komponenten somit gemeinsam auf der optischen Achse 100 zu liegen kommen. In vorteilhafter Weise ist die Montageplatte 124 derart ausgeformt, dass diese von einem Werkzeug gegriffen und manipuliert werden kann.

In einer vorteilhaften Ausführungsform erfolgt die Justage der Höhe der Linse 104 oberhalb der Laserdiode 102 dadurch, dass fein auflösende Schrauben von der Unterseite her auf die Kollimatorhalterfüße 120 aufgesetzt werden. Diese Justierschrauben können dann so eingestellt werden, dass die Füße 120 genau um das gewünschte Maß aus der Montageplatte 124 herausragen.

Das derart justierte optische System wird dabei vorteilhafterweise mittels geeigneter Klebeprozesse bleibend fixiert. Dabei ist beispielsweise denkbar, am einem umlaufenden Rand 132 der Montageplatte 124 Klebstoff anzubringen und diese nach der Justage an der Leiterplatte 108 zu fixieren. Analog ist es möglich, die Füße 120 des Kollimatorhalters 110 mit der Montageplatte 124 zu verkleben. Dies kann beispielsweise dadurch erfolgen, dass die sich zwischen dem Rand der Ausnehmungen 126 und den Kollimatorhalterfüße 120 ergebenden kleinen Spalten 134 mit Klebstoff aufgefüllt werden.
Bezüglich der Verklebung von Leiterplatte 108 und Montageplatte 124 ist auch denkbar, eine dünne Schicht 134 Klebstoff zwischen Leiterplatte und Montageplatte einzubringen und somit eine flächige Klebung zu realisieren. Um das Aushärten des Klebstoffes zu beschleunigen und kurze Prozesszeiten in einer Serienfertigung zu realisieren, ist es insbesondere zweckmäßig, lichtaushärtende Klebewerkstoffe (UV-Kleber) einzusetzen. Zur Optimierung der in diesem Fall erforderlichen Beleuchtung der Klebestellen ist es vorteilhaft, die Montageplatte 124 aus einem transparenten Werkstoff zu fertigen. In diesem Fall kann die Anordnung dann zur Aushärtung des Klebers von der Unterseite 129 der Montageplatte 124 durch diese hindurch belichtet werden.

Der gezeigten Montageablauf und der daraus resultierende Aufbau gemäß Figur 4 bzw. Figur 5 weist den Vorteil auf, dass mit ihm eine mehrachsige und präzise Justage der Optikkomponenten gelingt. Dies hat zudem den Vorteil, dass eine Schrumpfung des Klebewerkstoffs sich nicht, oder nur in geringem Maße auf die Justagegenauigkeit auswirkt. Dies wird insbesondere dadurch erreicht, dass die vom Klebstoff ausgefüllten Spalte entweder sehr klein sind, oder eine Schrumpfung des Klebstoffs beim Aushärten sich nicht auf die Justage auswirkt.

Alternativ zum Einsatz von Klebeprozessen zur Fixierung der einzelnen Teilkomponenten ist es prinzipiell auch denkbar, andere Methoden der Fixierung der einzelnen Montagegruppe zu verwenden. Beispielsweise ist es auch möglich, die Befestigungsfüße 120 des Kollimatorhalters 110 aus einem lötfähigen Werkstoff herzustellen und durch passgenaue Freihaltungen in einer dann ebenfalls metallischen Montageplatte hindurchzuführen. Die Fixierung der Einzelkomponenten würde dann nicht durch Verkleben, sondern durch Verlöten erfolgen. Im Gegensatz zu einer direkten Lötverbindung besteht dann der Vorteil, dass die Schrumpfung des Lots beim Abkühlen auf Raumtemperatur nicht zu einer Dejustage der Optik führt, weil die vom Lot überbrückten Spalte sehr klein sind.

Das Prinzip der Erfindung wurde am Beispiel der Kollimation eines Lasers illustriert. Ein Beispiel, welches insbesondere für den Einsatz in Laser-Entfernungsmessern oder Baulasern wichtig ist, da dort die Anforderung von niedrigen Kosten, hohen Genauigkeiten und extremen Limitierungen bezüglich des Platzes zusammen kommen.

Das erfindungsgemäße Verfahren, welches die Größe der Klebespalte durch geeignete Zwischenelemente reduziert, lässt sich jedoch auch auf andere optische Systeme übertragen, bei denen vergleichbare Genauigkeiten erzielt werden müssen.

## Patentansprüche

1. Verfahren zur Montage und dreidimensionalen Justage einer elektro-optischen Vorrichtung, bei dem ein erstes Bauelement (102) in drei Achsen relativ auf ein zweites Bauelement (104) ausgerichtet wird, **gekennzeichnet durch** folgende Verfahrensschritte:
a) das erste Bauelement (102) wird in einer ersten Position in oder auf einem ersten Trägerelement (108) fixiert,
b) das zweite Bauelement (104) wird in einer zweiten Position in oder auf einem zweiten Trägerelement (110) fixiert,
c) das zweite Trägerelement (110) wird mit einem dritten Trägerelement (124) verbunden,
wobei das erste und das dritte Trägerelement so arrangiert sind, dass es möglich ist, das dritte Trägerelement (124) relativ zum ersten Trägerelement (108) in zwei lateralen Raumrichtungen zu verschieben.
d) das dritte Trägerelement (124) wird relativ zum ersten Trägerelement (108) positioniert und an diesem fixiert, so dass die Lateralpositlon des zweiten Bauelementes (104) gegenüber dem ersten Bauelement (102) justiert wird, und die beiden zu justierenden Bauelemente (102, 104) gemeinsam auf einer optischen Achse (100) zu liegen kommen.
wobei das dritte Trägerelement (124) auf der dem ersten Bauelement (102) abgewandten Seite des ersten Trägerelementes (108) angeordnet wird.
e) und der axiale Abstand zwischen dem zweiten Bauelement (104) und dem ersten Bauelement (102) **durch** die relative axiale Position des zweiten Trägerelements (110) zu dem dritten Trägerelement (124) einjustiert wird.

2. Verfahren nach Anspruch 1, **dadurch gekennzeichnet, dass** das zweite Trägerelement (110) durch das erste Trägerelement (108) hindurch mit dem dritten Trägerelement (124) verbunden wird.

3. Verfahren nach Anspruch 1 oder 2, **dadurch gekennzeichnet, dass** das erste Trägerelement (108) Ausnehmungen (122) aufweist, durch die das zweite Trägerelement (110) zumindest teilweise hindurchgreift.

4. Verfahren nach Anspruch 2 oder 4, **dadurch gekennzeichnet, dass** die Position und der Winkel, welche das zweite Bauelement (104) relativ zum ersten Bauelement (102) einnimmt, durch Verstellen des dritten Trägerelementes (124), insbesondere durch Verschieben des dritten Trägerelementes (124) in zwei Raumrichtungen relativ zur ersten Trägerelement (108), einjustiert wird.

5. Verfahren nach einem der vorhergehenden Ansprüche, insbesondere nach Anspruch 4, **dadurch gekennzeichnet, dass** das dritte Trägerelement (124) über einen Klebeprozess an dem ersten Trägerelement (108) fixiert wird.

6. Verfahren nach Anspruch 5, **dadurch gekennzeichnet, dass** ein oder mehrere lichtaushärtende Klebewerkstoffe zur Fixierung verwendet werden.

7. Verfahren nach Anspruch 5 oder 6, **dadurch gekennzeichnet, dass** der oder die Klebewerkstoffe zur Aushärtung durch das dritte Trägerelement (124) hindurch beleuchtet werden.

8. Verfahren nach einem der vorhergehenden Ansprüche, insbesondere nach Anspruch 7, **dadurch gekennzeichnet, dass** das zweite Trägerelement (110) mit dem dritten Trägerelement (124) verlötet wird.

9. Verfahren nach einem der vorhergehenden Ansprüche 1 bis 8, insbesondere nach Anspruch 7, **dadurch gekennzeichnet, dass** das zweite Trägerelement (110) mit dem dritten Trägerelement (124) verklebt wird.

10. Verfahren nach einem der vorhergehenden Ansprüche, **dadurch gekennzeichnet, dass** das erste Trägerelement (108) eine Leiterplatte ist.

11. Verfahren nach einem der vorhergehenden Ansprüche, **dadurch gekennzeichnet, dass** das erste Bauelement (102) ein Lichtemitter, insbesondere eine Laserdiode, ist.

12. Verfahren nach Anspruch 10 oder 11, **dadurch gekennzeichnet, dass** das erste Bauelement (102) mit dem ersten Trägerelement (108) verlötet wird.

13. Messgerät, insbesondere ein elektro-optisches Distanzmessgerät (200), mit zumindest einem optischen Emitter (202) als einem ersten Bauelement (102) und einem strahlformenden Element (204) als einem zweiten Bauelement (104), justiert gemäß einem Verfahren nach zumindest einem der Ansprüche 1 bis 12.

## Claims

1. Method for the assembly and three-dimensional adjustment of an electrooptical device, in which a first component (102) is aligned in three axes in relation to a second component (104), **characterized by** the following method steps:
a) the first component (102) is fixed in a first position in or on a first carrier element (108),
b) the second component (104) is fixed in a second position in or on a second carrier element (110),
c) the second carrier element (110) is connected to a third carrier element (124),
the first and third carrier elements being arranged in such a way that it is possible to displace the third carrier element (124) in relation to the first carrier element (108) in two lateral spatial directions,
d) the third carrier element (124) is positioned in relation to the first carrier element (108) and fixed on it such that the lateral position of the second component (104) is adjusted with respect to the first component (102), and the two components (102, 104) to be adjusted come to lie on one and the same optical axis (100),
the third carrier element (124) being arranged on the side of the first carrier element (108) that is facing away from the first component (102),
e) and the axial distance between the second component (104) and the first component (102) is adjusted by the relative axial position of the second carrier element (110) in relation to the third carrier element (124).

2. Method according to Claim 1, **characterized in that** the second carrier element (110) is connected to the third carrier element (124) through the first carrier element (108).

3. Method according to Claim 1 or 2, **characterized in that** the first carrier element (108) has clearances (122), through which the second carrier element (110) at least partially reaches.

4. Method according to Claim 2 or 4, **characterized in that** the position and the angle that the second component (104) assumes in relation to the first component (102) is adjusted by adjusting the third carrier element (124), in particular by displacing the third carrier element (124), in two spatial directions in relation to the first carrier element (108).

5. Method according to one of the preceding claims; in particular according to Claim 4, **characterized in that** the third carrier element (124) is fixed on the first carrier element (108) by way of an adhesive bonding process.

6. Method according to Claim 5, **characterized in that** one or more light-curing adhesives are used for the fixing.

7. Method according to Claim 5 or 6, **characterized in that**, for the curing, the adhesive or adhesives is or are exposed to light through the third carrier element (124).

8. Method according to one of the preceding claims, in particular according to Claim 7, **characterized in that** the second carrier element (110) is soldered or brazed to the third carrier element (124).

9. Method according to one of the preceding Claims 1 to 8, in particular according to Claim 7, **characterized in that** the second carrier element (110) is adhesively bonded to the third carrier element (124).

10. Method according to one of the preceding claims, **characterized in that** the first carrier element (108) is a printed circuit board.

11. Method according to one of the preceding claims, **characterized in that** the first component (102) is a light emitter, in particular a laser diode.

12. Method according to Claim 10 or 11, **characterized in that** the first component (102) is soldered or brazed to the first carrier element (108).

13. Measuring instrument, in particular an electrooptical distance measuring instrument (200), with at least one optical emitter (202) as a first component (102) and a beam-shaping element (204) as a second component (104), adjusted on the basis of a method according to at least one of Claims 1 to 12.

## Revendications

1. Procédé de montage et d'ajustage tridimensionnel d'un dispositif électro-optique, dans lequel un premier composant (102) est orienté suivant trois axes par rapport à un deuxième composant (104), **caractérisé par** les étapes de procédé suivantes :
a) le premier composant (102) est fixé dans une première position dans ou sur un premier élément de support (108),
b) le deuxième composant (104) est fixé dans une deuxième position dans ou sur un deuxième élément de support (110),
c) le deuxième élément de support (110) est connecté à un troisième élément de support (124),
le premier et le troisième élément de support étant disposés de telle sorte qu'il soit possible de déplacer le troisième élément de support (124) par rapport au premier élément de support (108) dans deux directions spatiales latérales,
d) le troisième élément de support (124) est positionné par rapport au premier élément de support (108) et est fixé sur celui-ci de telle sorte que la position latérale du deuxième composant (104) par rapport au premier composant (102) soit ajustée, et que les deux composants à ajuster (102, 104) viennent s'appliquer ensemble sur un axe optique (100),
le troisième élément de support (124) étant disposé du côté du premier élément de support (108) opposé au premier composant (102),
e) et la distance axiale entre le deuxième composant (104) et le premier composant (102) est ajustée par la position axiale relative du deuxième élément de support (110) par rapport au troisième élément de support (124).

2. Procédé selon la revendication 1, **caractérisé en ce que** le deuxième élément de support (110) est connecté au troisième élément de support (124) à travers le premier élément de support (108).

3. Procédé selon la revendication 1 ou 2, **caractérisé en ce que** le premier élément de support (108) présente des évidements (122), à travers lesquels le deuxième élément de support (110) vient en prise au moins en partie.

4. Procédé selon la revendication 2 ou 4, **caractérisé en ce que** la position et l'angle formés par le deuxième composant (104) par rapport au premier composant (102) sont ajustés par réglage du troisième élément de support (124), en particulier par déplacement du troisième élément de support (124) dans deux directions spatiales par rapport au premier élément de support (108).

5. Procédé selon l'une quelconque des revendications précédentes, en particulier selon la revendication 4, **caractérisé en ce que** le troisième élément de support (124) est fixé par le biais d'un processus de collage au premier élément de support (108).

6. Procédé selon la revendication 5, **caractérisé en ce que** l'on utilise pour la fixation un ou plusieurs matériaux adhésifs photodurcissables.

7. Procédé selon la revendication 5 ou 6, **caractérisé en ce que** le ou les matériaux adhésifs sont éclairés en vue de leur durcissement à travers le troisième élément de support (124).

8. Procédé selon l'une quelconque des revendications précédentes, en particulier selon la revendication 7, **caractérisé en ce que** le deuxième élément de support (110) est brasé au troisième élément de support (124).

9. Procédé selon l'une quelconque des revendications précédentes 1 à 8, en particulier selon la revendication 7, **caractérisé en ce que** le deuxième élément de support (110) est collé au troisième élément de support (124).

10. Procédé selon l'une quelconque des revendications précédentes, **caractérisé en ce que** le premier élément de support (108) est une carte à circuits imprimés.

11. Procédé selon l'une quelconque des revendications précédentes, **caractérisé en ce que** le premier composant (102) est un émetteur de lumière, en particulier une diode laser.

12. Procédé selon la revendication 10 ou 11, **caractérisé en ce que** le premier composant (102) est brasé au premier élément de support (108).

13. Appareil de mesure, en particulier appareil de mesure de distance électro-optique (200), comprenant au moins un émetteur optique (202) en tant que premier composant (102) et un élément formant un faisceau (204) en tant que deuxième composant (104), ajusté selon un procédé selon au moins l'une quelconque des revendications 1 à 12.
